# EUROPEAN PATENT APPLICATION

(11) **EP 2 809 066 A1**
(43) Date of publication of application: **03.12.2014**
(21) Application number: 14152439.7
(22) Date of filing: 24.01.2014
(51) Int. Cl.: H04N 5/50, H04N 21/482, H04N 21/485, H04H 60/43, H04N 21/434, H04N 21/438

(54) **Electronic device, control method, and storage medium**

(30) Priority: 28.05.2013 JP 2013111765
(71) Applicant: Kabushiki Kaisha Toshiba, Tokyo 105-8001 (JP)
(72) Inventor: Kimura, Takahiro, Tokyo, 105-8001 (JP); Miyazaki, Satoshi, Tokyo, 105-8001 (JP)
(74) Representative: Henkel, Breuer & Partner

(57) **Abstract**

According to one embodiment, an electronic device includes a receiver (111, 112) configured to receive a broadcast signal, a channel list generating module (150) configured to generate a channel list based on channel information in the broadcast signal, a channel list editing module (150) configured to edit the channel list in response to an input operation, and a channel list updating module (150) configured to add a channel based on the channel information to the channel list when the channel list is edited by the channel list editing module and generate a new channel list based on the channel information when the channel list is not edited by the channel list editing module.

## Description

An embodiment described herein relates generally to an electronic device, a method for controlling the electronic device, and a storage medium.

Conventionally, an electronic device such as a TV broadcast receiving apparatus, which is capable of playing back video content such as a program included in a received TV broadcast signal, has become generally popular. The electronic device stores a channel list indicating a selectable channel. The channel list can be generated on the basis of channel information indicating a channel included in the broadcast signal. The channel list can be edited in accordance with an input operation. Accordingly, the electronic device may edit a channel to be displayed on the channel list.

When the channel included in the broadcast signal is updated, the channel information in the broadcast signal is also updated. When the electronic device is requested to update the channel list by the broadcast signal, it updates the channel list on the basis of the updated channel information. However, the electronic device has a problem that the edited channel list is likely to be updated.

An object of one embodiment of the present invention is to provide an electronic device, a method for controlling the electronic device, and a storage medium.

A general architecture that implements the various features of the embodiments will now be described with reference to the drawings. The drawings and the associated descriptions are provided to illustrate the embodiments and not to limit the scope of the invention.
FIG. 1 is an exemplary block diagram illustrating an electronic device according to an embodiment.
FIG. 2 shows an example of a channel list according to the embodiment.
FIG. 3 shows an example of an editing screen of the channel list according to the embodiment.
FIG. 4 is an exemplary flowchart illustrating an operation of the electronic device according to the embodiment.
FIG. 5 shows another example of a channel list according to the embodiment.
FIG. 6 shows another example of a channel list according to the embodiment.
FIG. 7 shows an example of an alert screen of the electronic device according to the embodiment.

Various embodiments will be described hereinafter with reference to the accompanying drawings.

In general, according to one embodiment, an electronic device includes a receiver configured to receive a broadcast signal, a channel list generating module configured to generate a channel list based on channel information in the broadcast signal, a channel list editing module configured to edit the channel list in response to an input operation, and a channel list updating module configured to add a channel based on the channel information to the channel list when the channel list is edited by the channel list editing module and generate a new channel list based on the channel information when the channel list is not edited by the channel list editing module.

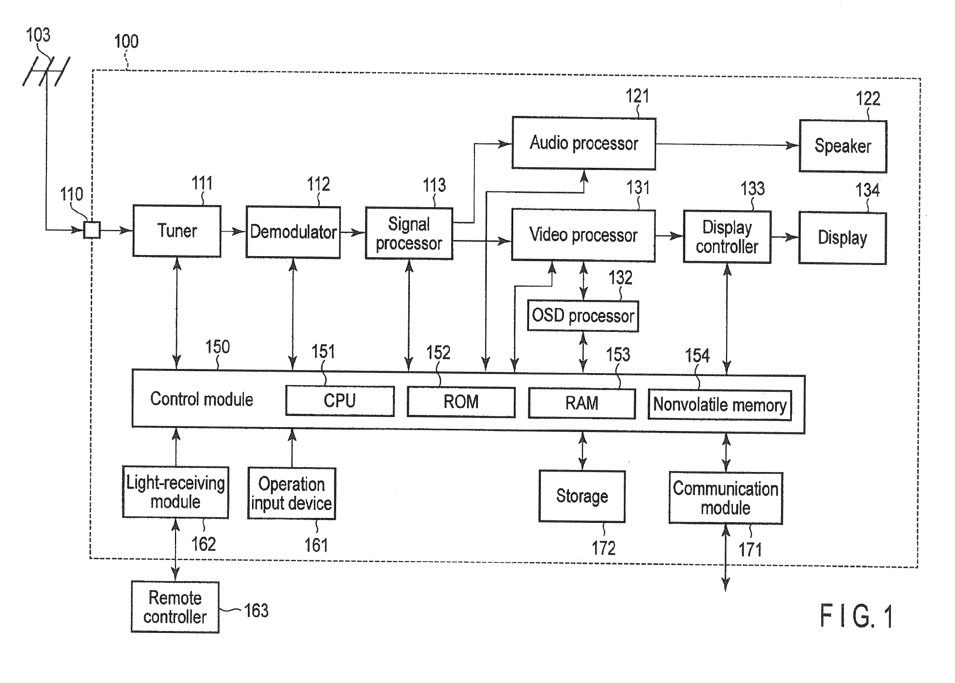

FIG. 1 illustrates an example of a broadcast receiving apparatus 100 according to the embodiment.

The broadcast receiving apparatus 100 is an electronic device capable of playing back, for example, a TV broadcast signal, or video content stored in a storage medium. The broadcast receiving apparatus 100 is, for example, an electronic device such as a television receiver, a video recorder and a personal computer (PC) including a tuner and a cellular phone terminal such as a cellular phone including a tuner. The broadcast receiving apparatus 100 may be connected to a network via a wireless communication terminal that serves as an access point for wireless communication.

The broadcast receiving apparatus 100 includes a broadcast signal input terminal 110, a tuner 111, a demodulator 112, a signal processor 113, an audio processor 121, a video processor 131, an OSD processor 132, a display controller 133, a control module 150, an operation input device 161, a light-receiving module 162, a communication module 171 and a storage 172. The broadcast receiving apparatus 100 further includes a speaker 122 and a display 134.

The broadcast signal input terminal 110 receives a digital broadcast signal from an antenna 103, for example. The antenna 103 may receive a terrestrial digital broadcast signal, BS digital broadcast signal, or CS digital broadcast signal. The broadcast signal input terminal 110 is also able to receive content data, such as programs supplied by means of the digital broadcast signal.

The broadcast signal input terminal 110 supplies the received digital broadcast signal to the tuner 111. The tuner 111 is a tuner for digital broadcast signals. The tuner 111 tunes the digital broadcast signal and transmits the tuned signal to the demodulator 112.

The demodulator 112 demodulates the received digital broadcast signal. Accordingly, the demodulator 112 acquires content data, such as a transport stream (TS) from the digital broadcast signal and supplies the content data to the signal processor 113. The antenna 103, tuner 111 and demodulator 112 serve as a receiving module which receives the content data.

The signal processor 113 performs signal processing, such as separation of the content data. More specifically, the signal processor 113 separates the content data into a digital video signal, a digital audio signal and other data signals. The signal processor 113 supplies the digital audio signal to the audio processor 121 and also supplies the digital video signal to the video processor 131. The signal processor 113 also supplies the data signal to the control module 150.

The audio processor 121 converts the digital audio signal into a signal with a format that is reproducible by the speaker 122. For example, the audio processor 121 converts the digital audio signal into an audio signal and supplies the audio signal to the speaker 122. The speaker 122 reproduces audio in response to the audio signal.

The video processor 131 converts the digital video signal, which is received from the signal processor 113, into a video signal (video display signal for display) with a format that is reproducible by the display 134. The video processor 131 performs a rendering to generate a video display signal in response to the digital video signal supplied from the signal processor 113. The rendering is performed by a variety of operations for the digital video signal supplied from the signal processor 113. The video processor 131 supplies the display controller 133 with the video display signal.

In response to a command from the control module 150, the OSD processor 132 generates a video display signal for displaying on the display 134 a menu screen, a channel list, an electronic program guide (EPG), a browser for browsing a Web site, a window for various applications, and other various information items such as a menu. The OSD processor 132 processes the generated video display signal to be superimposed on the video display signal output from the video processor 131.

The display controller 133 receives the processed video display signal from the video processor 131 and processes it to adjust image quality, such as color, brightness, sharpness and contrast under the control of the control module 150. The display controller 133 supplies the display 134 with the video display signal whose image quality is adjusted. In response to the video display signal, the display 134 displays a video image.

The display 134 includes a liquid crystal display device including a liquid crystal display panel having a plurality of pixels arranged in matrix, a backlight for illuminating the liquid crystal display panel, and the like. The display 134 displays a video image in response to the video display signal supplied from the display controller 133.

The control module 150 serves to control the operation of each of the modules of the broadcast receiving apparatus 100. The control module 150 includes a CPU 151, a ROM 152, a RAM 153, a nonvolatile memory 154 and the like. The control module 150 performs a variety of processes in response to an operation signal supplied from the operation input device 161 or light-receiving module 162.

The CPU 151 includes an arithmetic element that performs various arithmetic operations. The CPU 151 executes programs stored in the ROM 152 or the nonvolatile memory 154 to fulfill various functions.

The ROM 152 stores a program for controlling the broadcast receiving apparatus 100 and a program for fulfilling various functions. The CPU 151 starts a program stored in the ROM 152 in response to an operation signal supplied from the operation input device 161. Accordingly, the control module 150 controls the operation of each of the modules.

The RAM 153 serves as a work memory of the CPU 151. In other words, the RAM 153 stores, for example, data that is read and processed by the CPU 151.

The nonvolatile memory 154 stores various items of setting information, programs and the like.

The control module 150 selects a broadcast signal in accordance with an input operation. In other words, the control module 150 selects a program (or a channel that provides the program) which is to be displayed by the broadcast receiving apparatus 100 in accordance with an input operation.

The control module 150 generates a command for displaying various user interfaces on the display 134. The control module 150 supplies the generated command to the OSD processor 132. Thus, the control module 150 enables the OSD processor 132 to generate a user interface to be superimposed on a video image.

The operation input device 161 includes, for example, an operation key or a touchpad for generating an operation signal according to a user's input operation. The operation input device 161 may be configured to receive an operation signal from a keyboard, a mouse, an input device capable of generating an operation signal, or the like. The operation input device 161 supplies the operation signal to the control module 150. The touchpad includes a capacitive sensor or a device that generates positional information on the basis of another system.

The light-receiving module 162 includes, for example, a light-receiving lens which receives infrared rays from a remote controller 163 and a sensor, such as a photodiode, which converts the received rays into an electrical signal. The light-receiving module 162 generates an operation signal from the received infrared rays and supplies it to the control module 150.

The remote controller 163 generates an operation signal in accordance with a user's input operation. The remote controller 163 converts the operation signal into infrared rays and outputs them to the light-receiving module 162.

The communication module 171 may communicate with other devices on a network, such as the Internet and a home network, through a wireless communication terminal using a LAN or a wireless LAN. Accordingly, the broadcast receiving apparatus 100 may communicate with other devices connected to the wireless communication terminal.

The storage 172 includes a hard disk drive (HDD), a solid-state drive (SSD), or another storage device. The control module 150 may store a transport stream, which is processed by the signal processor 113, in the storage 172. The control module 150 may encode the transport stream into data of another format. The control module 150 may be configured to store the encoded data in the storage 172. Thus, the broadcast receiving apparatus 100 may record a broadcast signal or content which is supplied via a network, in the storage 172.

The broadcast receiving apparatus 100 may be configured to include a plurality of sets of tuner 111 and demodulator 112 and, in this case, the broadcast receiving apparatus 100 may acquire signals of various frequencies from the broadcast signal. Accordingly, the broadcast receiving apparatus 100 may acquire transport streams of various channels at the same time. The broadcast receiving apparatus 100 is therefore able to record the transport streams of various channels or data into which the transport streams are encoded, in the storage 172 at the same time.

The communication module 171 may be configured to receive a signal from a keyboard, a mouse, a microphone, a headset and other input devices. If the broadcast receiving apparatus 100 includes a USB terminal, a Bluetooth (trademark) module or the like, the communication module 171 receives a signal from an input device connected thereto through the USB or Bluetooth module and supplies the signal to the control module 150.

The storage 172, ROM 152 or nonvolatile memory 154 stores applications capable of executing various processes. For example, the storage 172 or nonvolatile memory 154 generates a channel list showing a list of channels in a broadcast signal and stores an application to be displayed on the display 134. In other words, the CPU 151 of the control module 150 executes the programs stored in the storage 172, ROM 152, nonvolatile memory 154 or the like and thus the control module 150 serves as a channel list generation module, a channel list editing module and a channel list updating module. The channel list is a list including a channel and its corresponding channel number.

The channel list generation module generates a channel list based on channel information in the broadcast signal. The channel list editing module edits the channel list in accordance with an input operation. When the channel list editing module edits the channel list, the channel list updating module adds a channel to the edited channel list on the basis of the channel information. When the channel list editing module does not edit the channel list, the channel list updating module generates a new channel list on the basis of the channel information.

For example, the control module 150 may acquire channel information indicative of a channel in the broadcast signal from the broadcast signal. The channel information acquired from the broadcast signal may be stored in the storage 172 or the nonvolatile memory 154. The channel information may include program information (metadata) of a program in each of the channels included in the broadcast signal.

The program information includes information indicating a broadcast station, information indicating broadcast time, information indicating a category of the program, information indicating a summary of the program (program summary), information indicating details of the program (detailed program information) and the like.

The control module 150 may analyze the stored channel information to recognize a list of channels included in the broadcast signal. The control module 150 may generate a channel list on the basis of the channel information.

The control module 150 is also able to analyze the stored program information to recognize a list of programs for each of the channels. The control module 150 is also able to generate EPG on the basis of the program information.

The storage 172 or the nonvolatile memory 154 may store the generated channel list and EPG. The control module 150 and the OSD processor 132 may display the stored channel list and EPG on the display 134 in accordance with an input operation.

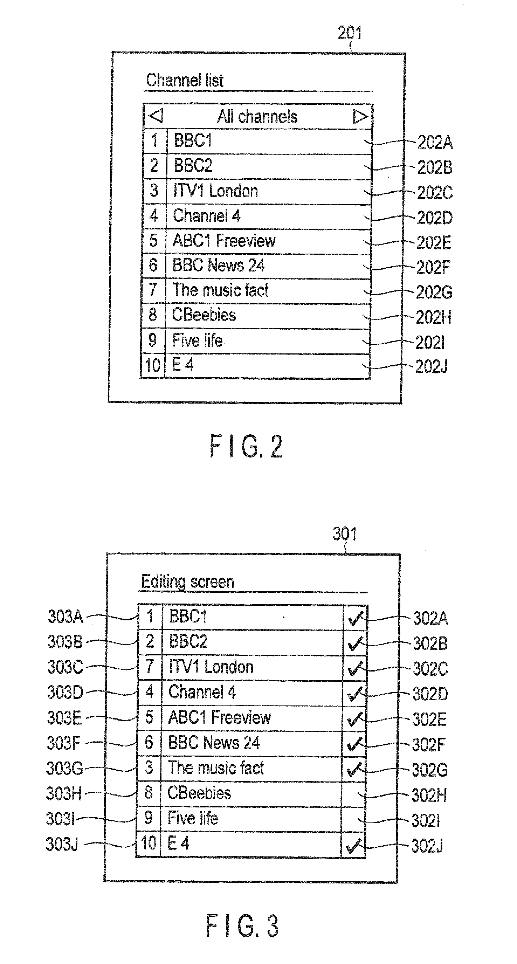

FIG. 2 illustrates an example of a channel list 201. The channel list 201 is one type of graphical user interface (GUI). The control module 150 may cause the OSD processor 132 to render various screens of the GUI.

The GUI includes graphical display of, for example, a channel list, an electronic program guide, program information and various menus on the display 134. The control module 150 may control the OSD processor 132 so as to display the GUI on the display 134 and notify a user of various items of information.

The channel list 201 includes a plurality of selection menus 202 (for example, selection menus 202A to 202J) which includes a channel and its corresponding channel number. When one of the selection menus 202 on the channel list 201 is selected, the control module 150 controls the tuner 111 so as to select a channel corresponding to the selected one of the selection menus 202.

FIG. 3 illustrates an example of an editing screen 301 for editing the channels displayed on the channel list 201.

Like the channel list 201, the editing screen 301 includes a plurality of selection menus including a channel and its corresponding channel number. Furthermore, each of the selection menus on the editing screen 301 includes a check box 302 (for example, check boxes 302A to 302J) and a channel number box 303 (channel number boxes 303A to 303J).

The check box 302 represents a display state of the channels in the channel list 201. If the check box 302 is checked, the control module 150 displays in the channel list 201 a channel corresponding to a selection menu including the checked check box 302. If the check box 302 is not checked, the control module 150 does not display in the channel list 201 a channel corresponding to a selection menu including the unchecked check box 302.

In the example shown in FIG. 3, the check boxes of "CBeeBies" of "channel 8" and "Five Life" of "channel 9" are unchecked and, in this case, the control module 150 does not cause the channel list 201 to display "CBeeBies" of "channel 8" or "Five Life" of "channel 9."

The control module 150 is set by a default so as to display all the channels indicated by the channel information on the channel list 201. In the default, the check box 302 of all the selection menus on the editing screen 301 is checked.

The channel number box 303 is a menu for editing a channel number for selecting each channel. When a channel number box 303 in a selection menu on the editing screen 301 is selected, the control module 150 receives a change in a channel number to be displayed on the selected channel number box 303. For example, if a numeric key of the remote controller 163 is selected, the control module 150 sets a number corresponding to the selected numeric key as a channel number.

For example, when a channel and a channel number to be displayed on the channel list 201 are edited by the editing screen 301, information indicating that the channel list 201 is edited (edited flag) is stored in a predetermined area in the storage 172 or the nonvolatile memory 154. The control module 150 may determine whether the channel list 201 is edited or not by a user according to the edited flag stored in the predetermined area in the storage 172 or the nonvolatile memory 154.

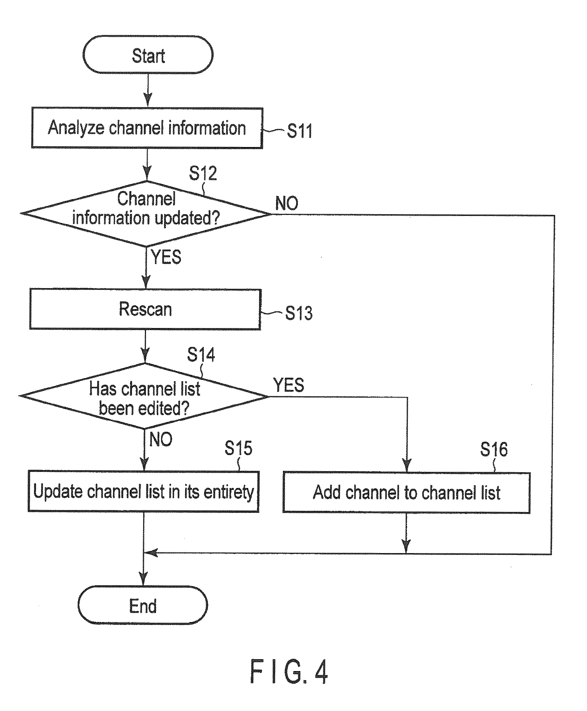

FIG. 4 illustrates an example of processing of the control module 150.

Upon receiving a broadcast signal, the control module 150 analyzes channel information contained in the broadcast signal at regular intervals (block S11). Accordingly, the control module 150 determines whether the channel information contained in the broadcast signal is updated at regular intervals (block S12).

As described above, the control module 150 stores the channel information in the storage 172 or the nonvolatile memory 154. The control module 150 may compare the channel information contained in the broadcast signal with the stored channel information to determine whether the channel information is updated. Furthermore, when the channel information is updated, the control module 150 may recognize an updated channel. In other words, the control module 150 may recognize an added channel and a canceled channel.

The broadcast signal includes, for example, a network information table (NIT) and a service description table (SDT) as channel information. The channel information includes information representing a list of services (channel numbers and channel names). The control module 150 causes the storage 172 or nonvolatile memory 154 to store the NIT and SDT. The control module 150 compares the stored NIT and SDT with an NIT and an SDT included in the broadcast signal. When they do not coincide with each other, the control module 150 determines that the channel information is updated.

When the control module 150 determines that the channel information is updated, rescanning is performed (block S13). Thus, the control module 150 may recognize the list of services on the basis of the updated channel information. In other words, the control module 150 may recognize a list of channels indicated by the updated channel information.

Furthermore, the control module 150 determines whether the channel list 201 stored in the storage 172 or nonvolatile memory 154 is edited by a user (block S14). In other words, the control module 150 determines whether an edited flag is stored in a predetermined area of the storage 172 or nonvolatile memory 154. When the edited flag is stored in the predetermined area of the storage 172 or nonvolatile memory 154, the control module 150 determines that the channel list 201 is edited by the user.

When the control module 150 determines that the channel list 201 is not edited by the user, it updates the channel list in its entirety on the basis of the channel information in the broadcast signal (block S15). In other words, the control module 150 generates a new channel list on the basis of the channel information in the broadcast signal and overwrites the existing channel list with the generated channel list. Thus, the control module 150 may generate a channel list in which the channel information is updated in its entirety.

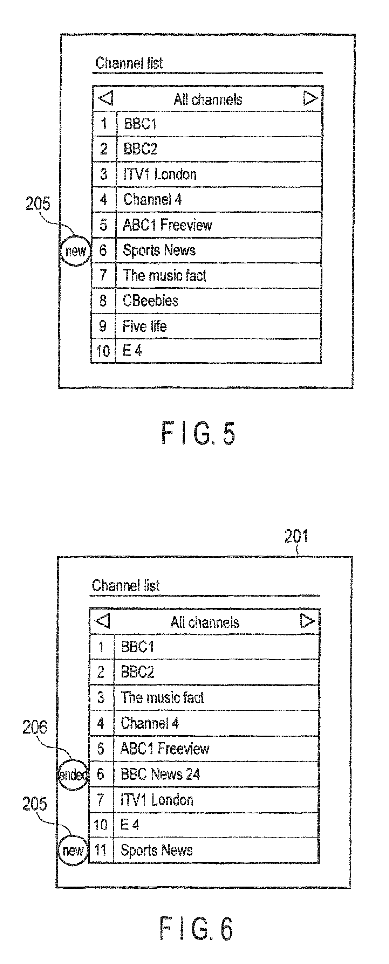

If the channel list is not edited as shown in FIG. 2, the control module 150 may generate a channel list to which a new channel is added and from which an unnecessary channel is canceled, as shown in FIG. 5. In FIG. 5, "BBC NEWS 24" of "channel 6" shown in FIG. 2 is canceled and "SPORTS NEWS" is added to "channel 6." Moreover, the control module 150 may display on the channel list information (using icon 205, color or the like) which indicates that a new channel is added to "SPORTS NEWS" of "channel 6" written by updating of the channel information. Accordingly, the broadcast receiving apparatus 100 enables the user to recognize the added channel easily.

If a logical channel number (LCN) for designating a channel number for each channel in the channel information is updated, the channels in the channel list are rearranged in order of channel number.

When the control module 150 determines that the channel list 201 is edited by the user, it writes a new channel to the existing channel list on the basis of the channel information in the broadcast signal (block S16). In other words, the control module 150 compares new channel information and old channel information to recognize the added channel and the canceled channel. The control module 150 writes the added channel to the lowermost part of the existing channel list. Thus, the control module 150 may generate a channel list in which channel information is updated while maintaining the edited contents of the channel list.

If, for example, the channel list is edited as shown in FIG. 3, the control module 150 may write a channel to the existing channel list according to updating of the channel information as shown in FIG. 6. In FIG. 6, "SPORTS NEWS" is added to "channel 11" in the lowermost part of the existing channel list. Even though the LCN is updated in the channel information, the control module 150 does not update the order of channel numbers or that of channels in the existing channel list. Thus, the control module 150 may hold the channel list edited by the user.

Furthermore, the control module 150 may display, at a channel added by updating of the channel information on the channel list, information (using icon 205, color or the like) which indicates that a new channel is added. Accordingly, the broadcast receiving apparatus 100 enables the user to recognize the added channels.

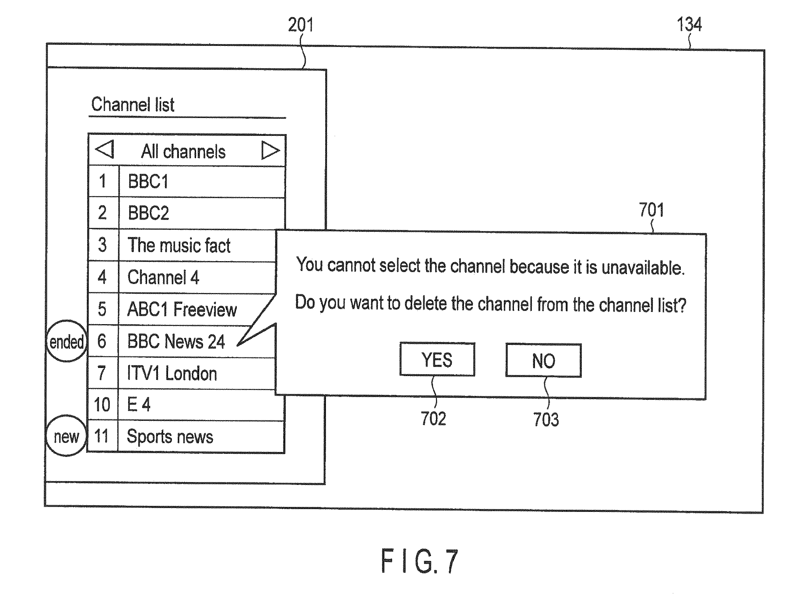

In the above case, the "BBC NEWS 24" of "channel 6," which is canceled from the updated channel information, can be left on the channel list. When a channel canceled from the updated channel information is present on the channel list, the control module 150 may display on the channel list information (using icon 206, color or the like) which indicates that the channel is closed. When a channel canceled from the updated channel information is selected by an input operation, the control module 150 may display on the display 134 an alert 701 indicating that a channel cannot be selected as shown in FIG. 7. Thus, the control module 150 enables the user to recognize the unselectable channel. In other words, when the channel list updated by the channel list updating module includes a channel not included in the broadcast signal, the control module 150 serves as an alerting module which provides an alert for information indicating that no channel is present.

Furthermore, when an unselectable channel is selected, the control module 150 may display in the alert 701 a YES menu 702 and a NO menu 703 to cause the user to determine whether the channel should be deleted from the channel list. Thus, the broadcast receiving apparatus 100 enables the user to recognize that the channel is unselectable and may delete the channel from the channel list in accordance with an operation of the YES menu 702 and NO menu 703.

Furthermore, when an unselectable channel is selected, the control module 150 may display the alert 701 shown in FIG. 7 on the display 134 and then delete the channel from the channel list automatically.

As described above, the broadcast receiving apparatus 100 updates the channel list in its entirety on the basis of the channel information when the channel list is not edited by the user and adds a new channel in the channel information to the lower part of the channel list when the channel list is edited by the user. Accordingly, the broadcast receiving apparatus 100 may add the new channel list to the channel list while holding the channel list edited by the user. Moreover, when the channel list is not edited, the broadcast receiving apparatus 100 may update the channel list in its entirety on the basis of the channel information, which saves a lot of trouble and time.

The above-described configuration realizes an electronic device that is improved in convenience, a method for controlling the electronic device and a storage medium.

In the foregoing embodiment, the broadcast receiving apparatus 100 is configured to select whether to update the channel list in its entirety or to add a new channel to the channel list according to whether the channel list is edited or not. The present invention is not limited to this configuration. The broadcast receiving apparatus 100 may be configured to select whether to update the channel list in its entirety or to add a new channel to the channel list on the basis of previously input settings, with the result that the broadcast receiving apparatus 100 may perform a user's desired operation.

The functions of the foregoing embodiment can be fulfilled not only by hardware but also by reading programs in a computer using software. The functions can be fulfilled using software or hardware appropriately.

The above embodiment is not limited to the descriptions themselves. When the invention is reduced to practice, its structural elements can be modified in different ways and embodied without departing from the spirit of the invention. Furthermore, a variety of inventions can be made by appropriate combinations of the structural elements of the embodiment. For example, some of the structural elements of the embodiment can be omitted. Moreover, the structural elements of different embodiments can be combined appropriately.

## Claims

1. An electronic device comprising:
a receiver (111, 112) configured to receive a broadcast signal, **characterized by** comprising:
a channel list generating module (150) configured to generate a channel list based on channel information in the broadcast signal;
a channel list editing module (150) configured to edit the channel list in response to an input operation; and
a channel list updating module (150) configured to add a channel based on the channel information to the channel list when the channel list is edited by the channel list editing module and generate a new channel list based on the channel information when the channel list is not edited by the channel list editing module.

2. The electronic device of claim 1, **characterized in that** the channel list updating module is configured to add a new channel to a lowermost part of the channel list when the channel list is edited by the channel list editing module.

3. The electronic device of claim 1, **characterized in that** the channel list comprises a list including a channel number and a channel corresponding to the channel number, and the channel list updating module is configured to add a new channel based on the channel information to the channel list when a channel number of the channel list is edited by the channel list editing module.

4. The electronic device of claim 1, **characterized by** further comprising:
a notifying module configured to provide notification of information indicating that a channel is not present when the channel, which is not included in the broadcast signal, is present in the channel list updated by the channel list updating module.

5. The electronic device of claim 4, **characterized in that** the channel list updating module is configured to delete the channel not included in the broadcast signal from the channel list when the channel list updating module notifies the information indicating that the channel is not present.

6. A method for controlling an electronic device comprising a receiver configured to receive a broadcast signal, the method **characterized by** comprising:
generating a channel list based on channel information in the broadcast signal;
editing the channel list in response to an input operation; and
adding a channel based on the channel information to the channel list when the channel list is edited and generating a new channel list based on the channel information when the channel list is not edited.

7. The method of claim 6, **characterized in that** a new channel is added to a lowermost part of the channel list when the channel list is edited.

8. The method of claim 6, **characterized in that** the channel list comprises a list including a channel number and a channel corresponding to the channel number, and a new channel is added based on the channel information to the channel list when a channel number of the channel list is edited.

9. The method of claim 6, **characterized by** further comprising:
providing notification of information indicating that a channel is not present when the channel, which is not included in the broadcast signal, is present in the updated channel list.

10. The method of claim 9, **characterized in that** the channel not included in the broadcast signal is deleted from the channel list when the information indicating that the channel is not present is notified.

11. A computer-readable storage medium storing computer-executable instructions that, when executed, cause a computer to:
generate a channel list based on channel information in the broadcast signal;
edit the channel list in response to an input operation; and
add a channel based on the channel information to the channel list when the channel list is edited and generate a new channel list based on the channel information when the channel list is not edited.
